# EUROPÄISCHE PATENTSCHRIFT

(11) **EP 1 504 942 B1**
(45) Veröffentlichungstag und Bekanntmachung des Hinweises auf die Patenterteilung: **11.11.2009**
(21) Anmeldenummer: 04016908.8
(22) Anmeldetag: 17.07.2004
(51) Int. Cl.: B60J 10/00

(54) **Dichtungseinrichtung an einer Schwenkschiebetür für Fahrzeuge zur Personenbeförderung, insbesondere Schienenfahrzeuge**
Sealing device for pivotable sliding door for vehicles for the transportation of persons, especially railway vehicles
Joint d'étanchéité pour une porte pivotante coulissante de véhicule pour transport de personnes, notamment véhicules ferroviaires

(30) Priorität: 29.07.2003 DE 20311653 U
(43) Veröffentlichungstag der Anmeldung: 09.02.2005
(73) Patentinhaber: Gebr. Bode GmbH & Co. KG, 34123 Kassel (DE)
(72) Erfinder: Wolfram, Berthold, 34266 Niestetal (DE); Stahl, Lars, 34320 Söhrewald (DE)
(74) Vertreter: Bauer Vorberg Kayser Patentanwälte

(56) Entgegenhaltungen:
- EP-A- 0 839 981
- EP-A- 1 288 420
- WO-A-03/097977
- CH-A- 688 354
- DE-U- 9 406 445
- DE-U- 9 418 117
- US-A- 5 566 504
- US-A- 6 125 591

## Beschreibung

Die Erfindung betrifft eine Dichtungseinrichtung an einer Schwenkschiebetür für Fahrzeuge zur Personenbeförderung, insbesondere Schienenfahrzeuge, mit den Merkmalen aus dem Oberbegriff des Patentanspruchs 1. Eine derartige Dichtungseinrichtung ist beispielsweise in DE 298 02 987 U beschrieben.

In EP 1 288 420 A1 ist eine Türspattabdichtung, insbesondere für eine Fahrzeugtür, beschrieben mit mindestens einem Fingerschutzprofil, wobei das Fingerschutzprofil an der Stirnseite eine längs verlaufende Kammer aufweist, die über die Außenkontur des Profilkörpers des Fingerschutzprofils vorsteht, wobei in der Kammer ein Schaltglied angeordnet ist, welches eine Vorrichtung zur Wiederöffnung der Tür ansteuert.

Bei der bekannten Dichtungseinrichtung enthält das Fingerschutzprofil Druckkammern, welche an den Türantrieb umsteuernde Sensoren angeschlossen sind, und es ist im Dichtungsprofil im Bereich zwischen den Dichtungslippen eine aufblasbare Dichtung angeordnet mit einer Luftkammer, die an eine Druckluftquelle angeschlossen ist und die an ihrer im geschlossenen Zustand der Tür den Dichtungsflächen des Türrahmens gegenüberliegenden Seite mit einer sich bei Druckanstieg nach außen wölbenden Dichtungsmembran abgeschlossen ist.

Die Erfindung bezweckt eine Weiterentwicklung der bekannten Dichtungseinrichtung, in dem die Druckdichtigkeit und der Sitz der Dichtungseinrichtung noch weiter verbessert wird, vor allem im Hinblick darauf, dass ein äußerer Druckanstieg oder Druckabfall nicht auf das Fahrzeuginnere übertragen wird. Auf diese Weise soll die Dichtungseinrichtung vorzugsweise bei Schienenfahrzeugen, die in modernen Hochgeschwindigkeitszügen betrieben werden sollen, verwendbar sein.

Der Erfindung liegt die Aufgabe zugrunde, eine Dichtungseinrichtung mit den Merkmalen aus dem Oberbegriff des Patentanspruchs 1 so auszugestalten, dass Toleranzen, die sich insbesondere bei der Montage oder im Betriebseinsatz durch Sogbelastung ergeben, aufgenommen werden und unter allen Bedingungen eine hervorragende Dichtigkeit sichergestellt werden kann. Weiterhin sollte erreicht werden, dass eine vorhandene Einklemmsicherungseinrichtung rein elektrisch angesteuert wird, so dass eine hohe Empfindlichkeit erreicht werden kann.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Dichtungseinrichtung sind in den abhängigen Ansprüchen beschrieben.

Der Grundgedanke der Erfindung besteht darin, ausgehend von der bekannten Dichtungseinrichtung die Luftkammer der aufblasbaren Dichtung im Hinblick auf die Mittelebene der Dichtungslippen nach außen zu verschieben derart, dass mindestens ein Teil der Luftkammer sich in die äußere Dichtungslippe hineinerstreckt. Im Fingerschutzprofil ist an Stelle der Druckkammern ein Raum vorgesehen, der eine elektrische Schaltleiste enthält, welche an die den Türantrieb umsteuernde Einklemmsicherungseinrichtung angeschlossen ist.

Es hatte sich gezeigt, dass bei einer plötzlichen, nach außen wirkenden Sogbelastung das Material des Dichtungsprofils relativ träge reagiert und nicht in allen Fällen eine befriedigende Abdichtung erreicht werden kann. Durch die erfindungsgemäße Ausbildung wird eine sehr gute Abdichtung erreicht, die auch Toleranzen am Umfang des Dichtungsprofils ausgleichen kann. Durch die Anordnung einer elektrischen Schaltleiste innerhalb des Dichtungsprofils ist eine rein elektrische Ansteuerung der Einklemmsicherungseinrichtung mit hoher Empfindlichkeit möglich.

Im folgenden wird anhand der beigefügten Zeichnungen ein Ausführungsbeispiel für eine Dichtungseinrichtung nach der Erfindung näher erläutert.

In den Zeichnungen zeigen
Fig. 1 einen Schnitt durch das umlaufende Dichtungsprofil einer Dichtungseinrichtung;
Fig. 2 einen Schnitt durch einen Teil der Schwenkschiebetür eines Schienenfahrzeugs im Bereich des umlaufenden Dichtungsprofils gem. Fig. 1.

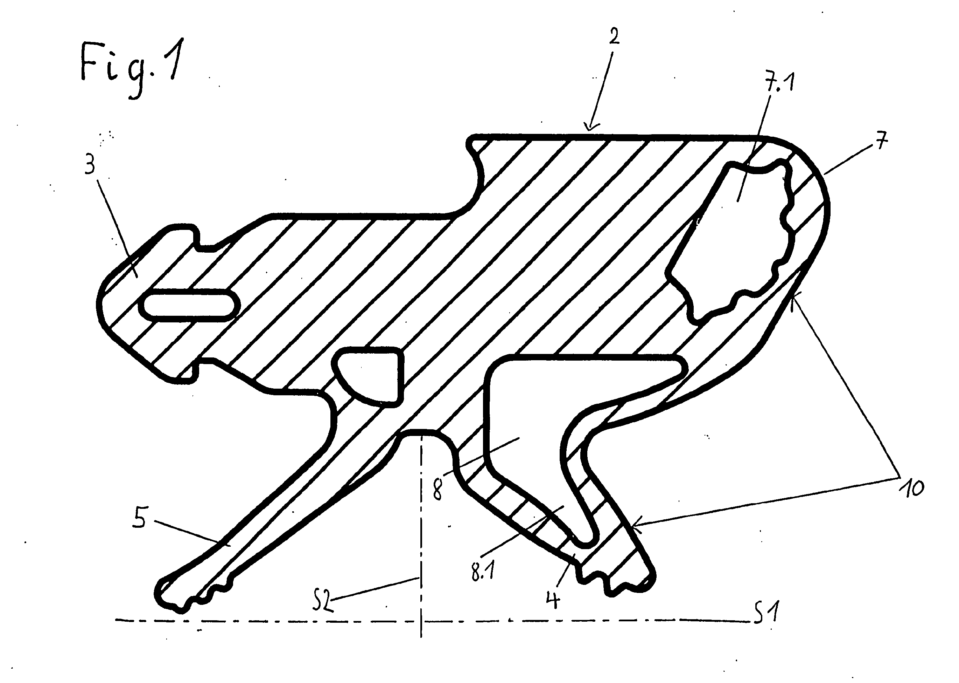

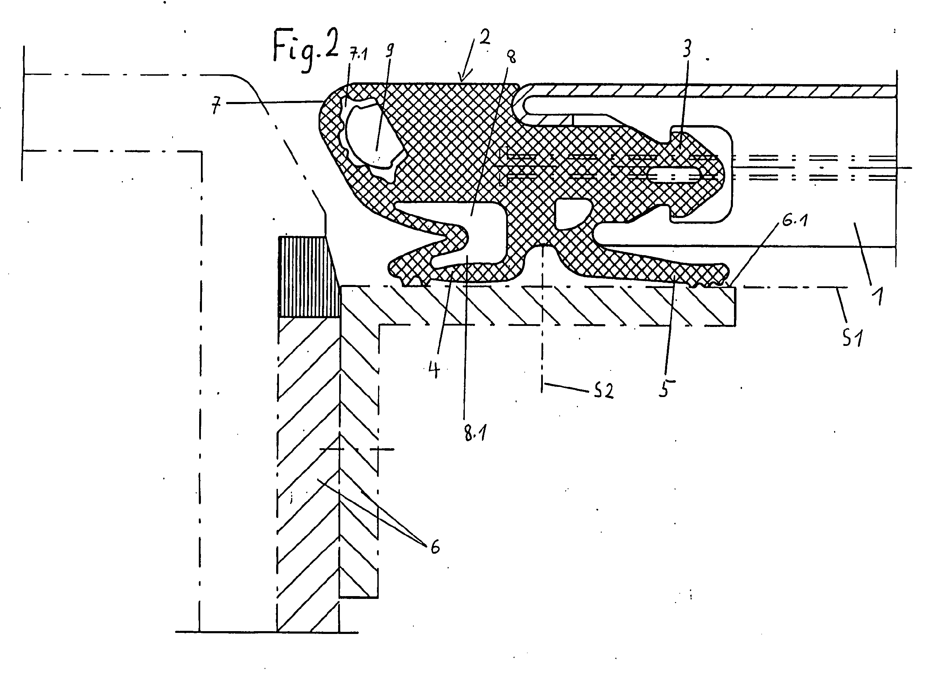

Fig. 1 zeigt im Schnitt ein Dichtungsprofil 2, das über einen Dichtungsfuß 3 in entsprechenden Ausnehmungen der Kanten eines Türblatts befestigbar ist und das zwei Dichtungslippen 4 und 5 besitzt, die zu beiden Seiten einer Mittelebene S2 angeordnet sind, welche senkrecht zur Schließebene S1 liegt, wie in den Fig. 1 und 2 angedeutet. Als "Schließebene" S1 soll dabei eine Ebene verstanden werden, in der die Dichtungsflächen 6.1 (Fig. 2) liegen oder parallel zu der diese Dichtungsflächen verlaufen, die, wie in Fig. 2 dargestellt, am Türrahmenprofil 6 angeordnet sind und an die sich im geschlossenen Zustand des Türblatts 1 die Dichtungslippen 4 und 5 anlegen.

Im Bereich der vertikalen Schließkante besitzt das umlaufende Dichtungsprofil 2 ein Fingerschutzprofil 7, das eine Kammer 7.1 enthält, in der, wie aus Fig. 2 ersichtlich, eine elektrische Schaltleiste 9 angeordnet ist, die in nicht dargestellter Weise elektrisch mit einer Einklemmsicherungseinrichtung verbunden ist.

Im Bereich zwischen der Kammer 7.1 und der äußeren Dichtungslippe 4 ist eine Luftkammer 8 angeordnet, die sich auf der der vertikalen Schließkante zugewandten Seite der Mittelebene S2 der Dichtungslippen 4 und 5 befindet. Ein Teil 8.1 dieser Luftkammer erstreckt sich in die äußere Dichtungslippe 4 hinein, so dass diese als aufblasbare Dichtung wirkt. Über nicht dargestellte Zuleitungen ist die Luftkammer 8 an eine nicht dargestellte Druckluftquelle angeschlossen.

Im Betrieb wird nach dem Schließen des Türblatts 1 und dem Anlegen der Dichtungslippen 4 und 5 an die Dichtungsfläche 6.1 der Luftkammer 8 Druckluft zugeführt, wodurch sich auch der Teil 8.1 der Luftkammer füllt und die Dichtungslippe 4 fest an die Dichtungsfläche 6.1 angepresst wird.

In dem in Fig. 1 dargestellten entspannten Zustand des Dichtungsprofils 2 besitzt die sich vom Fingerschutzprofil 7 zur benachbarten Dichtungslippe 4 hin erstreckende Außenfläche 10 einen sichelförmigen Flächenverlauf.

## Patentansprüche

1. Dichtungseinrichtung an einer Schwenkschiebetür für Fahrzeuge zur Personenbeförderung, insbesondere Schienenfahrzeuge, bei welcher im Türblatt (1) ein umlaufendes Dichtungsprofil (2) angeordnet ist, welches über einen Dichtungsfuß (3) in den Kanten des Türblatts (1) befestigt ist und zwei zu beiden Seiten einer senkrecht zur Schließebene (S1) stehenden Mittelebene (S2) angeordnete Dichtungslippen (4, 5) aufweist, die im geschlossenen Zustand der Tür an im wesentlichen parallel zur bzw. in der Schließebene (S1) liegenden Dichtungsflächen (6.1) eines Türrahmenprofils (6) anliegen, sowie im Bereich der vertikalen Schließkante ein Fingerschutzprofil (7), und in dem eine aufblasbare Dichtung angeordnet ist mit mindestens einer Luftkammer (8), die an eine Druckluftquelle angeschlossen ist, **dadurch gekennzeichnet, dass** die Luftkammer (8) lediglich auf einer Seite der Mittelebene (S2) der Dichtungslippen (4, 5) angeordnet ist, wobei mindestens ein Teil (8.1) der Luftkammer (8) sich in die betreffende Dichtungslippe (4) hineinerstreckt, und dass innerhalb des Fingerschutzprofils (7) eine elektrische Schaltleiste (9) angeordnet ist, die an eine den Türantrieb umsteuernde Einklemmsicherungseinrichtung angeschlossen ist.

2. Dichtungseinrichtung nach Anspruch 1, **dadurch gekennzeichnet, dass** die Luftkammer (8) auf der der vertikalen Schließkante zugewandten Seite der Mittelebene (S2) der Dichtungslippen (4, 5) liegt und sich in die der Schließkante zugewandte Dichtungslippe (4) hineinerstreckt.

3. Dichtungseinrichtung nach Anspruch 2, **dadurch gekennzeichnet, dass** die sich zur benachbarten Dichtungslippe (4) hin erstreckende Außenfläche (10) des Fingerschutzprofils (7) zusammen mit der sich anschließenden Seitenfläche der Dichtungslippe (4) im entspannten Zustand der Dichtungslippe einen sichelförmigen Flächenverlauf aufweist.

## Claims

1. A joint system on a sliding swing door for public transport vehicles, in particular for railbound vehicles, which has a peripheral joint profile (2) disposed in the door leaf (1), said joint profile being Fastened in the edges of the door leaf (1) through a joint foot (3) and comprising two sealing lips (4, 5) that are disposed on either side of a central plane (S), which is perpendicular to the closing plane (S1), and that fit against sealing surfaces (6.1) of a door frame profile (6) which are located substantially parallel to or in the closing plane (S1) when the door is closed, as well as, in the region of the vertical closing edge, a finger guard profile (7), and In which there is disposed an inflatable joint with at least one air chamber (8), which is connected to a source for compressed air, **characterized in that** the air chamber (8) is only disposed on one side of the central plane (S2) of the sealing lips (4, 5), at least one part (8.1) of the air chamber (8) extending into the corresponding sealing lip (4), and that an electric connecting block (9), which is connected to a jam safety device rerouting the door drive, is disposed inside said finger guard profile (7).

2. The joint system as set forth in claim 1, **characterized in that** the air chamber (8) lies on the side of the central plane (S2) of the sealing lips (4, 5) which is turned toward the vertical closing edge and that it extends into the sealing lip (4) turned toward the closing edge.

3. The joint system as set forth in claim 2, **characterized in that** the outer surface (10) of the finger guard profile (7), which extends as far as the neighboring sealing lip (4), comprises, together with the adjoining side surface of the sealing lip (4), a crescent-shaped surface when the sealing lip is in its released condition.

## Revendications

1. Dispositif d'étanchéité sur une porte pivotante coulissante pour véhicules de transport de voyageurs, en particulier pour véhicules ferroviaires, dans lequel un profilé d'étanchéité (2) périphérique est disposé dans le vantail (1) de la porte, ledit profilé d'étanchéité étant fixé par un pied d'étanchéité (3) dans les arêtes du vantail (1) de la porte et présentant deux lèvres d'étanchéité (4, 5) qui sont disposées de part et d'autre d'un plan médian (52) situé verticalement au plan de fermeture (S1), et qui, en état fermé de la porte, s'appliquent contre des faces d'étanchéité (6.1) d'un profilé d'encadrement de porte (6) situées pour l'essentiel parallèlement au ou bien dans ledit plan de fermeture (S1), ainsi que - au niveau de l'arête verticale de fermeture - un profilé anti-pince doigts (7), et dans ledit profilé d'étanchéité étant disposé un joint d'étanchéité gonflable comprenant au moins une chambre à air (8) qui est reliée à une source d'air comprimé, **caractérisé par le fait que** ladite chambre à air (8) n'est disposée que d'un côté du plan médian (52) des lèvres d'étanchéité (4, 5), au moins une partie (8.1) de la chambre à air (8) se projetant dans la lèvre d'étanchéité respective (4), et qu'à l'intérieur dudit profilé anti-pince doigts (7) est disposée une barre électrique de commutation (9) qui est connectée à un dispositif anti-coincement renversant l'opérateur de porte.

2. Dispositif d'étanchéité selon la revendication 1, **caractérisé par le fait que** ladite chambre à air (8) est située du côté du plan médian (52) des lèvres d'étanchéité (4, 5), qui est tourné vers l'arête verticale de fermeture, et se projette dans la lèvre d'étanchéité (4) montrant vers l'arête de fermeture.

3. Dispositif d'étanchéité selon la revendication 2, **caractérisé par le fait que** la face extérieure (10) du profilé anti-pince doigts (7), qui s'étend vers la lèvre voisine d'étanchéité (4), présente conjointement avec la face latérale contiguë de la lèvre d'étanchéité (4), en état détendu de la lèvre d'étanchéité, une allure de surface en forme de faucille.
